# EUROPEAN PATENT APPLICATION

(11) **EP 4 799 986 A1**
(43) Date of publication of application: **02.09.2026**
(21) Application number: 24882397.3
(22) Date of filing: 22.10.2024
(51) Int. Cl.: C03C 3/32, G02B 1/00

(54) **HALIDE GLASS AND OPTICAL ELEMENT**

(30) Priority: 23.10.2023 JP 2023181696
(71) Applicant: Nippon Electric Glass Co., Ltd., Otsu-shi, Shiga 520-8639 (JP)
(72) Inventor: KOBAYASHI, Yuta, Otsu-shi Shiga 520-8639 (JP); FUKUMOTO, Shotaro, Otsu-shi Shiga 520-8639 (JP); SATO, Fumio, Otsu-shi Shiga 520-8639 (JP)
(74) Representative: Hoffmann Eitle
(86) International application number: PCT/JP2024/037632
(87) International publication number: WO 2025/089286

(57) **Abstract**

To provide a halide glass and an optical element having dispersion properties comparable to those of fluorite. A halide glass contains, in mol%, from 11% to 40% of AlF₃, from 0.1% to 20% of ScF₃, and from 10% to 88.9% of MgF₂+CaF₂+SrF₂+BaF₂.

## Description

### TECHNICAL FIELD

The present invention relates to a halide glass and an optical element.

### BACKGROUND ART

In optical systems such as a camera, lenses made of a low dispersion material are used to correct chromatic aberration. For example, fluorite is known as a representative low dispersion material.

On the other hand, fluorite has poor formability and processability, making lens manufacturing time-consuming and costly. Therefore, as an alternative material to fluorite, for example, a fluoride glass having an Abbe number (vd) similar to that of fluorite, and a halide glass such as a fluorophosphate glass are being investigated (Patent Literatures 1 and 2).

### CITATION LIST

### PATENT LITERATURE

Patent Literature 1: JP2019-151493A
Patent Literature 2: JP2016-023111A

### SUMMARY OF INVENTION

### TECHNICAL PROBLEM

In addition to being low dispersion, fluorite also exhibits a high partial dispersion ratio (anomalous partial dispersibility). Therefore, no halide glass having dispersion properties comparable to those of fluorite has been developed, and further investigation is required.

In view of the above, an object of the present invention to provide a halide glass and an optical element having dispersion properties comparable to those of fluorite.

### SOLUTION TO PROBLEM

Hereinafter, each aspect of a halide glass and an optical element that solve the above problems will be described.

A halide glass according to Aspect 1 contains, in mol%, from 11% to 40% of AlF₃, from 0.1% to 20% of ScF₃, and from 10% to 88.9% of MgF₂+CaF₂+SrF₂+BaF₂.

It is preferable that a halide glass according to Aspect 2 is based on Aspect 1, and contains, in mol%, from 0% to 30% of MgF₂, from 0% to 30% of CaF₂, from 0% to 30% of SrF₂, and from 0% to 20% of BaF₂.

It is preferable that a halide glass according to Aspect 3 is based on Aspect 1 or Aspect 2, and further contains, in mol%, from 0% to 20% of YF₃.

It is preferable that a halide glass according to Aspect 4 is based on any one of Aspect 1 to Aspect 3, in which ScF₃/(AlF₃+YF₃+ScF₃) is from 0.01 to 0.5 in molar ratio.

A halide glass according to Aspect 5 contains, in cation%, from 11% to 60% of Al³⁺, from 0.1% to 20% of Sc³⁺, and from 10% to 88.9% of Mg²⁺+Ca²⁺+Sr²⁺+Ba²⁺, and contains, in anion%, from 70% to 100% of F⁻.

It is preferable that a halide glass according to Aspect 6 is based on Aspect 5, and further contains, in anion%, from 0% to 10% of Cl⁻+Br⁻+I⁻.

It is preferable that a halide glass according to Aspect 7 is based on Aspect 5 or Aspect 6, and further contains, in cation%, from 0% to 30% of Mg²⁺, from 0% to 30% of Ca²⁺, from 0% to 30% of Sr²⁺, and from 0% to 20% of Ba²⁺.

It is preferable that a halide glass according to Aspect 8 is based on any one of Aspect 5 to Aspect 7, and further contains, in cation%, from 0% to 20% of Y³⁺.

It is preferable that a halide glass according to Aspect 9 is based on any one of Aspect 5 to Aspect 8, and further contains, in cation%, less than 0.01% of Ln (Ln is at least one selected from Cr, Ce, Nd, Yb, Er, Pr, Sm, Eu, Tb, Dy, Ho, and Tm).

It is preferable that a halide glass according to Aspect 10 is based on any one of Aspect 1 to Aspect 9, in which an Abbe number (vd) is from 85 to 110.

It is preferable that a halide glass according to Aspect 11 is based on any one of Aspect 1 to Aspect 10, in which a partial dispersion ratio (θg, F) is from 0.516 to 0.580.

An optical element according to Aspect 12 contains the halide glass according to any one of Aspect 1 to Aspect 11.

### ADVANTAGEOUS EFFECTS OF INVENTION

According to the present invention, it is possible to provide a halide glass and an optical element having dispersion properties comparable to those of fluorite.

### DESCRIPTION OF EMBODIMENTS

### (Halide Glass A)

A halide glass according to the present invention contains, in mol%, from 11% to 40% of AlF₃, from 0.1% to 20% of ScF₃, and from 10% to 88.9% of MgF₂+CaF₂+SrF₂+BaF₂. Reasons for limiting the content of each component as described above are as follows. Note that, in the description of the content of each component of the halide glass A, % means mol% unless otherwise specified.

AlF₃ is an essential component capable of improving the stability against the crystallization. The content of AlF₃ is preferably from 11% to 40%. More specifically, the lower limit of the content of AlF₃ is preferably 11% or more, 12% or more, 15% or more, 20% or more, and particularly preferably 25% or more. The upper limit of the content of AlF₃ is preferably 40% or less, 35% or less, and particularly preferably 33% or less. When the content of AlF₃ is too small, the crystallization is likely to occur. When the content of AlF₃ is too large, a partial dispersion ratio (θg, F) is likely to decrease.

ScF₃ is an essential component that is particularly likely to increase the partial dispersion ratio (θg, F). The content of ScF₃ is preferably from 0.1% to 20%. More specifically, the lower limit of the content of ScF₃ is preferably 0.1% or more, 1% or more, 1.5% or more, 2% or more, and particularly preferably 5% or more. The upper limit of the content of ScF₃ is preferably 20% or less, and particularly preferably 19% or less. When the content of ScF₃ is too small, the partial dispersion ratio (θg, F) is likely to decrease. When the content of ScF₃ is too large, the crystallization is likely to occur.

MgF₂, CaF₂, SrF₂, and BaF₂ are components that are likely to improve the stability of the glass. The content of MgF₂+CaF₂+SrF₂+BaF₂ is preferably from 10% to 88.9%. More specifically, the lower limit of the content of MgF₂+CaF₂+SrF₂+BaF₂ is preferably 10% or more, 15% or more, 20% or more, 25% or more, 30% or more, 35% or more, 40% or more, and particularly preferably 45% or more. The upper limit of the content of MgF₂+CaF₂+SrF₂+BaF₂ is preferably 88.9% or less, 88.8% or less, 80% or less, 75% or less, 70% or less, 65% or less, 60% or less, and particularly preferably 57.5% or less. When the content of MgF₂+CaF₂+SrF₂+BaF₂ is too small, the above effects are difficult to achieve. When the content of MgF₂+CaF₂+SrF₂+BaF₂ is too large, the partial dispersion ratio (θg, F) is likely to decrease. Note that, "MgF₂+CaF₂+SrF₂+BaF₂" refers to a total content of MgF₂, CaF₂, SrF₂, and BaF₂. In addition, a preferred content of each of the MgF₂, CaF₂, SrF₂, and BaF₂ components is as follows.

MgF₂ is a component that reduces the dispersibility. The content of MgF₂ is preferably from 0% to 30%. More specifically, the lower limit of the content of MgF₂ is preferably 0% or more, 1% or more, 5% or more, 10% or more, and particularly preferably 15% or more. The upper limit of the content of MgF₂ is preferably 30% or less, 28% or less, 26% or less, and particularly preferably 24% or less. When the content of MgF₂ is too large, the crystallization is likely to occur.

CaF₂ is a component that is likely to improve the stability of the glass. The content of CaF₂ is preferably from 0% to 30%. More specifically, the lower limit of the content of CaF₂ is preferably 0% or more, 1% or more, 5% or more, 8% or more, and particularly preferably 10% or more. The upper limit of the content of CaF₂ is preferably 30% or less, 27% or less, 25% or less, 22% or less, and particularly preferably 20% or less. When the content of CaF₂ is too large, an Abbe number (vd) is likely to increase. In addition, the partial dispersion ratio (θg, F) is likely to decrease.

SrF₂ is a component that improves the stability against the vitrification. The content of SrF₂ is preferably from 0% to 30%. More specifically, the lower limit of the content of SrF₂ is preferably 0% or more, 1% or more, 5% or more, 8% or more, and particularly preferably 10% or more. The upper limit of the content of SrF₂ is preferably 30% or less, 29% or less, 27% or less, 25% or less, 23% or less, and particularly preferably 20% or less. When the content of SrF₂ is too large, the crystallization is likely to occur.

BaF₂ is a component that improves the stability against the crystallization and that is likely to increase the Abbe number (vd). The content of BaF₂ is preferably from 0% to 20%. More specifically, the lower limit of the content of BaF₂ is preferably 0% or more, 1% or more, 3% or more, and particularly preferably 5% or more. The upper limit of the content of BaF₂ is preferably 20% or less, and particularly preferably 17% or less. When the content of BaF₂ is too large, the partial dispersion ratio (θg, F) is likely to decrease.

YF₃ is a component capable of improving the stability against the crystallization. The content of YF₃ is preferably from 0% to 20%. More specifically, the lower limit of the content of YF₃ is preferably 0% or more, 0.1% or more, 1% or more, and particularly preferably 3% or more. The upper limit of the content of YF₃ is preferably 20% or less, 19% or less, 15% or less, 13% or less, and particularly preferably 11% or less. When the content of YF₃ is too small, the partial dispersion ratio (θg, F) is likely to decrease, and when it is too large, the crystallization is likely to occur.

The molar ratio ScF₃/(AlF₃+YF₃+ScF₃) is preferably from 0.01 to 0.5. More specifically, the upper limit of ScF₃/(AlF₃+YF₃+ScF₃) is preferably 0.5 or less, 0.4 or less, and particularly preferably 0.3 or less. The lower limit of ScF₃/(AlF₃+YF₃+ScF₃) is preferably 0.01 or more, and particularly preferably 0.1 or more. When the above value is satisfied, the Abbe number (vd) is likely to increase. Note that, "ScF₃/(AlF₃+YF₃+ScF₃)" refers to a value obtained by dividing the content of ScF₃ by the total content of AlF₃, YF₃, and ScF₃.

The halide glass according to the present invention may further contain other fluoride components. For example, ZrF₄, HfF₄, GaF₃, InF₃, or ZnF₂ may be contained. More specifically, the total content of ZrF₄, HfF₄, GaF₃, InF₃, and ZnF₂ may be 15% or less, 10% or less, and particularly 5% or less.

The halide glass according to the present invention is preferably a so-called fluoride glass, which contains a fluoride as a main component. However, the halide glass according to the present invention may contain the following optional components in addition to a fluoride.

The halide glass according to the present invention preferably contains a chloride component such as AlCl₃, YCl₃, LaCl₃, GdCl₃, YbCl₃, MgCl₂, CaCl₂, SrCl₂, and BaCl₂. When the chloride component is contained, the stability of the glass is likely to be improved. More specifically, the upper limit of the total content of the chloride component is preferably 15% or less, 10% or less, and particularly preferably 5% or less. The lower limit of the total content of the chloride component is, for example, preferably 0% or more, 0.1% or more, and particularly preferably 0.5% or more. In addition, the content of each chloride component is preferably 15% or less, 10% or less, particularly preferably 5% or less, and the lower limit of the content of each component may be, for example, 0% or more, 0.1% or more, and particularly 0.5% or more. Note that, among the chloride components, BaCl₂ is preferably contained particularly from the viewpoint of a raw material cost. For example, BaCl₂ is contained in an amount of preferably from 0% to 15%, from 0% to 10%, and particularly preferably from 0.1% to 10%.

The halide glass according to the present invention preferably contains a phosphate component such as Al(PO₃)₃, Mg(PO₃)₂, Ca(PO₃)₂, Sr(PO₃)₂, Ba(PO₃)₂, P₂O₅, and KPF₆. When the phosphate component is contained, the stability of the glass can be improved. The total content of the phosphate component is preferably 15% or less, 10% or less, and particularly preferably 5% or less, from the viewpoint of accurately achieving the effects of the present invention. The lower limit of the total content of the phosphate component may be, for example, 0% or more, 0.1% or more, and particularly 0.5% or more.

### (Halide Glass B)

In an embodiment of the present invention, a halide glass contains, in cation%, from 11% to 60% of Al³⁺, from 0.1% to 20% of Sc³⁺, and from 10% to 88.9% of Mg²⁺+Ca²⁺+Sr²⁺+Ba²⁺, and contains, in anion%, from 70% to 100% of F⁻. Reasons for limiting the content of each component as described above are as follows. Note that, in the description of the content of each component of the halide glass B, % means cation% or anion% unless otherwise specified.

Al³⁺ is an essential component capable of improving the stability against the crystallization. The content of Al³⁺ is preferably from 11% to 60%. More specifically, the lower limit of the content of Al³⁺ is preferably 11% or more, 12% or more, 15% or more, 20% or more, and particularly preferably 25% or more. The upper limit of the content of Al³⁺ is preferably 60% or less, 55% or less, 50% or less, 45% or less, 40% or less, 35% or less, and particularly preferably 33% or less. When the content of Al³⁺ is too small, the crystallization is likely to occur. When the content of Al³⁺ is too large, the partial dispersion ratio (θg, F) is likely to decrease.

Sc³⁺ is an essential component that is particularly likely to increase the partial dispersion ratio (θg, F). The content of Sc³⁺ is preferably from 0.1% to 20%. More specifically, the lower limit of the content of Sc³⁺ is preferably 0.1% or more, 1% or more, 1.5% or more, 2% or more, and particularly preferably 5% or more. The upper limit of the content of Sc³⁺ is preferably 20% or less, and particularly preferably 19% or less. When the content of Sc³⁺ is too small, the partial dispersion ratio (θg, F) is likely to decrease. When the content of Sc³⁺ is too large, the crystallization is likely to occur.

Mg²⁺, Ca²⁺, Sr²⁺, and Ba²⁺ are components that are likely to improve the stability of the glass. The content of Mg²⁺+Ca²⁺+Sr²⁺+Ba²⁺ is preferably from 10% to 88.9%. More specifically, the lower limit of the content of Mg²⁺+Ca²⁺+Sr²⁺+Ba²⁺ is preferably 10% or more, 15% or more, 20% or more, 25% or more, 30% or more, 35% or more, 40% or more, and particularly preferably 45% or more. The upper limit of the content of Mg²⁺+Ca²⁺+Sr²⁺+Ba²⁺ is preferably 88.9% or less, 88.8% or less, 80% or less, 75% or less, 70% or less, 65% or less, 60% or less, and particularly preferably 57.5% or less. When the content of Mg²⁺+Ca²⁺+Sr²⁺+Ba²⁺ is too small, the above effects are difficult to achieve. When the content of Mg²⁺+Ca²⁺+Sr²⁺+Ba²⁺ is too large, the partial dispersion ratio (θg, F) is likely to decrease. Note that, "Mg²⁺+Ca²⁺+Sr²⁺+Ba²⁺" refers to the total content of Mg²⁺, Ca²⁺, Sr²⁺, and Ba²⁺. In addition, a preferred content of each of the Mg²⁺, Ca²⁺, Sr²⁺ and Ba²⁺ components is as follows.

Mg²⁺ is a component that reduces the dispersibility. The content of Mg²⁺ is preferably from 0% to 30%. More specifically, the lower limit of the content of Mg²⁺ is preferably 0% or more, 1% or more, 5% or more, 10% or more, and particularly preferably 15% or more. The upper limit of the content of Mg²⁺ is preferably 30% or less, 28% or less, 26% or less, and particularly preferably 24% or less. When the content of Mg²⁺ is too large, the crystallization is likely to occur.

Ca²⁺ is a component that is likely to improve the stability of the glass. The content of Ca²⁺ is preferably from 0% to 30%. More specifically, the lower limit of the content of Ca²⁺ is preferably 0% or more, 1% or more, 5% or more, 8% or more, and particularly preferably 10% or more. The upper limit of the content of Ca²⁺ is preferably 30% or less, 27% or less, 25% or less, 22% or less, and particularly preferably 20% or less. When the content of Ca²⁺ is too large, the Abbe number (vd) is likely to increase. In addition, the partial dispersion ratio (8g, F) is likely to decrease.

Sr²⁺ is a component that improves the stability against the vitrification. The content of Sr²⁺ is preferably from 0% to 30%. More specifically, the lower limit of the content of Sr²⁺ is preferably 0% or more, 1% or more, 5% or more, 8% or more, and particularly preferably 10% or more. The upper limit of the content of Sr²⁺ is preferably 30% or less, 29% or less, 27% or less, 25% or less, 23% or less, and particularly preferably 20% or less. When the content of Sr²⁺ is too large, the crystallization is likely to occur.

Ba²⁺ is a component that improves the stability against the crystallization and that is likely to increase the Abbe number (vd). The content of Ba²⁺ is preferably from 0% to 20%. More specifically, the lower limit of the content of Ba²⁺ is preferably 0% or more, 1% or more, 3% or more, and particularly preferably 5% or more. The upper limit of the content of Ba²⁺ is preferably 20% or less, and particularly preferably 17% or less. When the content of Ba²⁺ is too large, the partial dispersion ratio (θg, F) is likely to decrease.

Y³⁺ is a component capable of improving the stability against the crystallization. The content of Y³⁺ is preferably from 0% to 20%. More specifically, the lower limit of the content of Y³⁺ is preferably 0% or more, 0.1% or more, 1% or more, and particularly preferably 3% or more. The upper limit of the content of Y³⁺ is preferably 20% or less, 19% or less, 15% or less, 13% or less, and particularly preferably 11% or less. When the content of Y³⁺ is too small, the partial dispersion ratio (θg, F) is likely to decrease, and when it is too large, the crystallization is likely to occur.

The cation ratio Sc³⁺/(Al³⁺+Y³⁺+Sc³⁺) is preferably from 0.01 to 0.5. More specifically, the upper limit of Sc³⁺/(Al³⁺+Y³⁺+Sc³⁺) is preferably 0.5 or less, and particularly preferably 0.3 or less. The lower limit of Sc³⁺/(Al³⁺+Y³⁺+Sc³⁺) is preferably 0.01 or more, and particularly preferably 0.1 or more. When the above value is satisfied, the Abbe number (vd) is likely to increase. Note that, "Sc³⁺/(Al³⁺+Y³⁺+Sc³⁺)" refers to a value obtained by dividing the content of Sc³⁺ by the total content of Al³⁺, Y³⁺, and Sc³⁺.

The halide glass according to the present invention may further contain other cation components. For example, at least one or more selected from Zr⁴⁺, Hf⁴⁺, Ga³⁺, In³⁺, and Zn²⁺ may be contained. For example, the total content of Zr⁴⁺, Hf⁴⁺, Ga³⁺, In³⁺, and Zn²⁺ may be 15% or less, 10% or less, and particularly 5% or less.

In the halide glass according to the present invention, the content of Ln (Ln is at least one selected from Cr, Ce, Nd, Yb, Er, Pr, Sm, Eu, Tb, Dy, Ho, and Tm) is preferably less than 0.01%, less than 0.001%, and particularly preferably, no Ln is contained. When the content of these components is large, the glass is likely to undergo devitrification. In addition, there is a risk that the halide glass is colored and is difficult to be used as an alternative material to fluorite. Note that, examples of the valence of Cr include, but are not limited to, trivalent (Cr³⁺) and hexavalent (Cr⁶⁺). Examples of the valence of Ce include, but are not limited to, trivalent (Ce³⁺) and tetravalent (Ce⁴⁺). Examples of the valence of Nd include, but are not limited to, trivalent (Nd³⁺). Examples of the valence of Yb include, but are not limited to, trivalent (Yb³⁺). Examples of the valence of Er include, but are not limited to, trivalent (Er³⁺). Examples of the valence of Pr include, but are not limited to, trivalent (Pr³⁺). Examples of the valence of Sm include, but are not limited to, trivalent (Sm³⁺). Examples of the valence of Eu include, but are not limited to, trivalent (Eu³⁺). Examples of the valence of Tb include, but are not limited to, trivalent (Tb³⁺) and tetravalent (Tb⁴⁺). Examples of the valence of Dy include, but are not limited to, trivalent (Dy³⁺). Examples of the valence of Ho include, but are not limited to, trivalent (Ho³⁺). Examples of the valence of Tm include, but are not limited to, trivalent (Tm³⁺).

F⁻ is an essential component for forming the halide glass according to the present invention. The content of F⁻ is preferably from 70% to 100%. More specifically, the lower limit of the F⁻ content is preferably 70% or more, 80% or more, 90% or more, and particularly preferably 95% or more. When the content of F⁻ is too small, the vitrification is difficult. The upper limit of the content of F⁻ is preferably 100% or less, 99.9% or less, and particularly preferably 99.6% or less. However, in order to contain an anion component other than F⁻, the upper limit of the content of F⁻ may be 95% or less, and particularly 90% or less.

The halide glass according to the present invention may contain the following anion components.

Cl⁻, Br⁻, and I⁻ are components that improve the stability against the crystallization in coexistence with F⁻ in the glass. The content of Cl⁻+Br⁻+I⁻ is preferably from 0% to 10%. The lower limit of the content of Cl⁻+Br⁻+I⁻ is preferably 0% or more, 0.1% or more, 0.2% or more, and particularly preferably 0.3% or more. The upper limit of the content of Cl⁻+Br⁻+I⁻ is preferably 10% or less, 6% or less, 5% or less, and particularly preferably 3% or less. When the content of Cl⁻+Br⁻+I⁻ is too large, problems such as devitrification of the glass, phase separation of the glass, and deterioration of weather resistance are likely to occur. Note that, "Cl⁻+Br⁻+I⁻" represents the total content of Cl⁻, Br⁻, and I⁻.

Cl⁻ is a component that is likely to remarkably improve the stability against the crystallization in coexistence with F⁻ in the glass. The content of Cl⁻ is preferably from 0% to 10%. The lower limit of the content of Cl⁻ is preferably 0% or more, 0.1% or more, 0.2% or more, and particularly preferably 0.3% or more. The upper limit of the content of Cl⁻ is preferably 10% or less, 6% or less, 5% or less, and particularly preferably 3% or less. When the content of Cl⁻ is too large, problems such as devitrification of the glass, phase separation of the glass, and deterioration of weather resistance are likely to occur.

Br⁻ is a component that is likely to improve the stability against the crystallization in coexistence with F⁻ in the glass. The content of Br⁻ is preferably from 0% to 10%. The lower limit of the content of Br⁻ is preferably 0% or more, 0.1% or more, 0.2% or more, and particularly preferably 0.3% or more. The upper limit of the content of Br⁻ is preferably 10% or less, 6% or less, 5% or less, and particularly preferably 3% or less. When the content of Br⁻ is too large, problems such as devitrification of the glass, phase separation of the glass, and deterioration of weather resistance are likely to occur.

I⁻ is a component that is likely to improve the stability against the crystallization in coexistence with F⁻ in the glass. The content of I⁻ is preferably from 0% to 10%. The lower limit of the content of I⁻ is preferably 0% or more, 0.1% or more, 0.2% or more, and particularly preferably 0.3% or more. The upper limit of the content of I⁻ is preferably 10% or less, 6% or less, 5% or less, and particularly preferably 3% or less. When the content of I⁻ is too large, problems such as devitrification of the glass, phase separation of the glass, and deterioration of weather resistance are likely to occur.

When the halide glasses A and B according to the present invention satisfy the above composition, dispersion properties comparable to those of fluorite can be obtained. For example, the halide glass according to the present invention preferably has an Abbe number (vd) of from 85 to 110 and a partial dispersion ratio (θg, F) of from 0.515 to 0.550.

The Abbe number (vd) is preferably from 85 to 110. More specifically, the lower limit of the Abbe number (vd) is preferably 85 or more, 90 or more, 91 or more, or 93 or more, and particularly preferably 95 or more. The upper limit of the Abbe number (vd) is preferably 110 or less, 100 or less, and particularly preferably 99 or less. When the above Abbe number (vd) is satisfied, the halide glass according to the present invention can be suitably used as an alternative material to fluorite.

The partial dispersion ratio (θg, F) is preferably from 0.516 to 0.580. More specifically, the lower limit of the partial dispersion ratio (θg, F) is preferably 0.516 or more, 0.520 or more, 0.525 or more, and particularly preferably 0.530 or more. The upper limit of the partial dispersion ratio (θg, F) is preferably 0.580 or less, more preferably 0.550 or less, and particularly preferably 0.545 or less. When the above partial dispersion ratio (θg, F) is satisfied, the halide glass according to the present invention exhibits anomalous partial dispersibility comparable to that of fluorite. Therefore, it can be suitably used as an alternative material to fluorite.

The halide glass according to the present invention has a refractive index (nd) of preferably from 1.39 to 1.5, and particularly preferably from 1.40 to 1.45. When the above refractive index is satisfied, the halide glass according to the present invention is comparable to fluorite in terms of refractive index and can be suitably used as an alternative material to fluorite.

The halide glass according to the present invention can be suitably used as an optical element. In other words, an optical element according to the present invention is made of the above halide glass according to the present invention. Examples of the optical element include an optical lens, a prism, a filter, a diffraction grating, and an optical fiber, with the optical lens being particularly preferred. The optical lens is preferably a special low dispersion lens.

The halide glass according to the present invention can be prepared, for example, as follows.

First, raw materials are weighed to obtain a raw material batch having a desired composition. Next, the raw material batch is charged into a crucible. As the crucible, a platinum crucible, a gold crucible, a glassy carbon crucible, or the like can be used.

Next, the raw material batch is melted at about 900°C to 1100°C. The melting time can be, for example, 1 hour to 2 hours. The melt is then quenched and annealed near the glass transition temperature to obtain a halide glass.

### Examples

Hereinafter, the present invention will be described based on Examples, but the present invention is not limited to these Examples.

Tables 1 to 10 show Examples 1 to 95 of the present invention and Comparative Example 1.

**Table 1**

| | | Example 1 | Example 2 | Example 3 | Example 4 | Example 5 |
|---|---|---|---|---|---|---|
| Glass composition (mol%) | AlF₃ | 31 | 32 | 29 | 28 | 30 |
| | ScF₃ | 5 | 5 | 5 | 5 | 6 |
| | MgF₂ | 22.5 | 22.5 | 22.5 | 22.5 | 22.5 |
| | CaF₂ | 13 | 13 | 13 | 13 | 13 |
| | SrF₂ | 13 | 13 | 13 | 13 | 13 |
| | BaF₂ | 9 | 9 | 9 | 9 | 9 |
| | YF₃ | 6 | 5 | 8 | 9 | 6 |
| | BaCl₂ | 0.5 | 0.5 | 0.5 | 0.5 | 0.5 |
| | MgF₂+CaF₂+SrF₂+BaF₂ | 57.5 | 57.5 | 57.5 | 57.5 | 57.5 |
| | ScF₃/(AlF₃+YF₃+ScF₃) | 0.12 | 0.12 | 0.12 | 0.12 | 0.14 |
| Glass composition (cation%) | Al³⁺ | 31 | 32 | 29 | 28 | 30 |
| | Sc³⁺ | 5 | 5 | 5 | 5 | 6 |
| | Mg²⁺ | 22.5 | 22.5 | 22.5 | 22.5 | 22.5 |
| | Ca²⁺ | 13 | 13 | 13 | 13 | 13 |
| | Sr²⁺ | 13 | 13 | 13 | 13 | 13 |
| | Ba²⁺ | 9.5 | 9.5 | 9.5 | 9.5 | 9.5 |
| | Y³⁺ | 6 | 5 | 8 | 9 | 6 |
| | Mg²⁺+Ca²⁺+Sr²⁺+Ba²⁺ | 58 | 58 | 58 | 58 | 58 |
| | Sc³⁺/(Al³⁺+Y³⁺+Sc³⁺) | 0.12 | 0.12 | 0.12 | 0.12 | 0.14 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.41775 | 1.41621 | 1.42151 | 1.42310 | 1.41925 |
| n_{C} | | 1.41644 | 1.41493 | 1.42020 | 1.42180 | 1.41794 |
| n_{F} | | 1.42074 | 1.41915 | 1.42453 | 1.42604 | 1.42224 |
| n_{g} | | 1.42302 | 1.42143 | 1.42686 | 1.42847 | 1.42456 |
| v_{d} | | 97.2 | 98.6 | 97.3 | 99.8 | 97.5 |
| θ_{g,F} | | 0.5302 | 0.5403 | 0.5381 | 0.5731 | 0.5395 |

**Table 1 (Continued)**

| | | Example 6 | Example 7 | Example 8 | Example 9 | Example 10 |
|---|---|---|---|---|---|---|
| Glass composition (mol%) | AlF₃ | 30 | 31 | 32 | 33 | 30 |
| | ScF₃ | 7 | 6 | 4 | 4 | 9 |
| | MgF₂ | 22.5 | 22.5 | 22.5 | 22.5 | 22.5 |
| | CaF₂ | 13 | 13 | 13 | 13 | 13 |
| | SrF₂ | 13 | 13 | 13 | 13 | 13 |
| | BaF₂ | 9 | 9 | 9 | 9 | 9 |
| | YF₃ | 5 | 5 | 6 | 5 | 3 |
| | BaCl₂ | 0.5 | 0.5 | 0.5 | 0.5 | 0.5 |
| | MgF₂+CaF₂+SrF₂+BaF₂ | 57.5 | 57.5 | 57.5 | 57.5 | 57.5 |
| | ScF₃/(AlF₃+YF₃+ScF₃) | 0.17 | 0.14 | 0.10 | 0.10 | 0.21 |
| Glass composition (cation%) | Al³⁺ | 30 | 31 | 32 | 33 | 30 |
| | Sc³⁺ | 7 | 6 | 4 | 4 | 9 |
| | Mg²⁺ | 22.5 | 22.5 | 22.5 | 22.5 | 22.5 |
| | Ca²⁺ | 13 | 13 | 13 | 13 | 13 |
| | Sr²⁺ | 13 | 13 | 13 | 13 | 13 |
| | Ba²⁺ | 9.5 | 9.5 | 9.5 | 9.5 | 9.5 |
| | Y³⁺ | 5 | 5 | 6 | 5 | 3 |
| | Mg²⁺+Ca²⁺+Sr²⁺+Ba²⁺ | 58 | 58 | 58 | 58 | 58 |
| | Sc³⁺/(Al³⁺+Y³⁺+Sc³⁺) | 0.17 | 0.14 | 0.10 | 0.10 | 0.21 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.41869 | 1.41706 | 1.41664 | 1.41445 | 1.41712 |
| n_{C} | | 1.41738 | 1.41575 | 1.41536 | 1.41317 | 1.41578 |
| n_{F} | | 1.42167 | 1.42003 | 1.41957 | 1.41736 | 1.42014 |
| n_{g} | | 1.42397 | 1.42232 | 1.42183 | 1.41961 | 1.42244 |
| ν_{d} | | 97.6 | 97.4 | 99.0 | 98.9 | 95.7 |
| θ_{g,F} | | 0.5361 | 0.5350 | 0.5368 | 0.5370 | 0.5275 |

**Table 2**

| | | Example 11 | Example 12 | Example 13 | Example 14 | Example 15 |
|---|---|---|---|---|---|---|
| Glass composition (mol%) | AlF₃ | 30 | 29 | 29 | 30 | 30 |
| | ScF₃ | 8 | 8 | 7 | 5 | 5 |
| | MgF₂ | 22.5 | 22.5 | 22.5 | 24 | 19.5 |
| | CaF₂ | 13 | 13 | 13 | 11.5 | 16 |
| | SrF₂ | 13 | 13 | 13 | 13 | 13 |
| | BaF₂ | 9 | 9 | 9 | 9 | 9 |
| | YF₃ | 4 | 5 | 6 | 7 | 7 |
| | BaCl₂ | 0.5 | 0.5 | 0.5 | 0.5 | 0.5 |
| | MgF₂+CaF₂+SrF₂+BaF₂ | 57.5 | 57.5 | 57.5 | 57.5 | 57.5 |
| | ScF₃/(AlF₃+YF₃+ScF₃) | 0.19 | 0.19 | 0.17 | 0.12 | 0.12 |
| Glass composition (cation%) | Al³⁺ | 30 | 29 | 29 | 30 | 30 |
| | Sc³⁺ | 8 | 8 | 7 | 5 | 5 |
| | Mg²⁺ | 22.5 | 22.5 | 22.5 | 24 | 19.5 |
| | Ca²⁺ | 13 | 13 | 13 | 11.5 | 16 |
| | Sr²⁺ | 13 | 13 | 13 | 13 | 13 |
| | Ba²⁺ | 9.5 | 9.5 | 9.5 | 9.5 | 9.5 |
| | Y³⁺ | 4 | 5 | 6 | 7 | 7 |
| | Mg²⁺+Ca²⁺+Sr²⁺+Ba²⁺ | 58 | 58 | 58 | 58 | 58 |
| | Sc³⁺/(Al³⁺+Y³⁺+Sc³⁺) | 0.19 | 0.19 | 0.17 | 0.12 | 0.12 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.41759 | 1.41965 | 1.41884 | 1.41859 | 1.42161 |
| n_{C} | | 1.41627 | 1.41832 | 1.41752 | 1.41729 | 1.42028 |
| n_{F} | | 1.42061 | 1.42265 | 1.42183 | 1.42159 | 1.42461 |
| n_{g} | | 1.42291 | 1.42497 | 1.42418 | 1.42389 | 1.42695 |
| ν_{d} | | 96.2 | 96.9 | 97.2 | 97.3 | 97.4 |
| θ_{g,F} | | 0.5300 | 0.5358 | 0.5452 | 0.5349 | 0.5404 |

**Table 2 (Continued)**

| | | Example 16 | Example 17 | Example 18 | Example 19 | Example 20 |
|---|---|---|---|---|---|---|
| Glass composition (mol%) | AlF₃ | 30 | 29 | 30 | 30 | 30 |
| | ScF₃ | 5 | 7 | 5 | 5 | 5 |
| | MgF₂ | 22.5 | 12.5 | 17.5 | 19.5 | 19.5 |
| | CaF₂ | 13 | 18 | 18 | 13 | 13 |
| | SrF₂ | 10 | 13 | 13 | 16 | 13 |
| | BaF₂ | 12 | 7 | 9 | 9 | 12 |
| | YF₃ | 7 | 13 | 7 | 7 | 7 |
| | BaCl₂ | 0.5 | 0.5 | 0.5 | 0.5 | 0.5 |
| | MgF₂+CaF₂+SrF₂+BaF₂ | 57.5 | 50.5 | 57.5 | 57.5 | 57.5 |
| | ScF₃/(AlF₃+YF₃+ScF₃) | 0.12 | 0.14 | 0.12 | 0.12 | 0.12 |
| Glass composition (cation%) | Al³⁺ | 30 | 29 | 30 | 30 | 30 |
| | Sc³⁺ | 5 | 7 | 5 | 5 | 5 |
| | Mg²⁺ | 22.5 | 12.5 | 17.5 | 19.5 | 19.5 |
| | Ca²⁺ | 13 | 18 | 18 | 13 | 13 |
| | Sr²⁺ | 10 | 13 | 13 | 16 | 13 |
| | Ba²⁺ | 12.5 | 7.5 | 9.5 | 9.5 | 12.5 |
| | Y³⁺ | 7 | 13 | 7 | 7 | 7 |
| | Mg²⁺+Ca²⁺+Sr²⁺+Ba²⁺ | 58 | 51 | 58 | 58 | 58 |
| | Sc³⁺/(Al³⁺+Y³⁺+Sc³⁺) | 0.12 | 0.14 | 0.12 | 0.12 | 0.12 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.42188 | 1.43022 | 1.42234 | 1.42235 | 1.42393 |
| n_{C} | | 1.42057 | 1.42884 | 1.42101 | 1.42103 | 1.42259 |
| n_{F} | | 1.42492 | 1.43334 | 1.42536 | 1.42538 | 1.42697 |
| n_{g} | | 1.42726 | 1.43577 | 1.42767 | 1.42770 | 1.42933 |
| ν_{d} | | 97.0 | 95.6 | 97.1 | 97.1 | 96.8 |
| θ_{g,F} | | 0.5379 | 0.5400 | 0.5310 | 0.5333 | 0.5388 |

**Table 3**

| | | Example 21 | Example 22 | Example 23 | Example 24 | Example 25 |
|---|---|---|---|---|---|---|
| Glass composition (mol%) | AlF₃ | 30 | 30 | 30 | 30 | 30 |
| | ScF₃ | 5 | 5 | 5 | 5 | 5 |
| | MgF₂ | 19.5 | 22.5 | 17.5 | 17.5 | 15.5 |
| | CaF₂ | 13 | 13 | 13 | 13 | 13 |
| | SrF₂ | 13 | 13 | 15 | 13 | 13 |
| | BaF₂ | 9 | 6 | 9 | 11 | 12 |
| | YF₃ | 10 | 10 | 10 | 10 | 11 |
| | BaCl₂ | 0.5 | 0.5 | 0.5 | 0.5 | 0.5 |
| | MgF₂+CaF₂+SrF₂+BaF₂ | 54.5 | 54.5 | 54.5 | 54.5 | 53.5 |
| | ScF₃/(AlF₃+YF₃+ScF₃) | 0.11 | 0.11 | 0.11 | 0.11 | 0.11 |
| Glass composition (cation%) | Al³⁺ | 30 | 30 | 30 | 30 | 30 |
| | Sc³⁺ | 5 | 5 | 5 | 5 | 5 |
| | Mg²⁺ | 19.5 | 22.5 | 17.5 | 17.5 | 15.5 |
| | Ca²⁺ | 13 | 13 | 13 | 13 | 13 |
| | Sr²⁺ | 13 | 13 | 15 | 13 | 13 |
| | Ba²⁺ | 9.5 | 6.5 | 9.5 | 11.5 | 12.5 |
| | Y³⁺ | 10 | 10 | 10 | 10 | 11 |
| | Mg²⁺+Ca²⁺+Sr²⁺+Ba²⁺ | 55 | 55 | 55 | 55 | 54 |
| | Sc³⁺/(Al³⁺+Y³⁺+Sc³⁺) | 0.11 | 0.11 | 0.11 | 0.11 | 0.11 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.42271 | 1.41859 | 1.42548 | 1.42624 | 1.43000 |
| n_{C} | | 1.42138 | 1.41728 | 1.42413 | 1.42488 | 1.42865 |
| n_{F} | | 1.42572 | 1.42157 | 1.42852 | 1.42927 | 1.43311 |
| n_{g} | | 1.42807 | 1.42388 | 1.43088 | 1.43164 | 1.43551 |
| ν_{d} | | 97.4 | 97.6 | 96.9 | 97.1 | 96.4 |
| θ_{g,F} | | 0.5415 | 0.5385 | 0.5376 | 0.5399 | 0.5381 |

**Table 3 (Continued)**

| | | Example 26 | Example 27 | Example 28 | Example 29 | Example 30 |
|---|---|---|---|---|---|---|
| Glass composition (mol%) | AlF₃ | 30 | 30 | 30 | 30 | 30 |
| | ScF₃ | 5 | 5 | 5 | 5 | 5 |
| | MgF₂ | 15.5 | 17.5 | 17.5 | 15.5 | 17.5 |
| | CaF₂ | 13 | 11 | 13 | 13 | 18 |
| | SrF₂ | 16 | 13 | 11 | 13 | 13 |
| | BaF₂ | 9 | 12 | 12 | 16 | 9 |
| | YF₃ | 11 | 11 | 11 | 7 | 7 |
| | BaCl₂ | 0.5 | 0.5 | 0.5 | 0.5 | 0.5 |
| | MgF₂+CaF₂+SrF₂+BaF₂ | 53.5 | 53.5 | 53.5 | 57.5 | 57.5 |
| | ScF₃/(AlF₃+YF₃+ScF₃) | 0.11 | 0.11 | 0.11 | 0.12 | 0.12 |
| Glass composition (cation%) | Al³⁺ | 30 | 30 | 30 | 30 | 30 |
| | Sc³⁺ | 5 | 5 | 5 | 5 | 5 |
| | Mg²⁺ | 15.5 | 17.5 | 17.5 | 15.5 | 17.5 |
| | Ca²⁺ | 13 | 11 | 13 | 13 | 18 |
| | Sr²⁺ | 16 | 13 | 11 | 13 | 13 |
| | Ba²⁺ | 9.5 | 12.5 | 12.5 | 16.5 | 9.5 |
| | Y³⁺ | 11 | 11 | 11 | 7 | 7 |
| | Mg²⁺+Ca²⁺+Sr²⁺+Ba²⁺ | 54 | 54 | 54 | 58 | 58 |
| | Sc³⁺/(Al³⁺+Y³⁺+Sc³⁺) | 0.11 | 0.11 | 0.11 | 0.12 | 0.12 |
| Glass composition (anion%) | F⁻ | 99.6 | 99.6 | 99.6 | 99.6 | 99.6 |
| | Cl⁻ | 0.4 | 0.4 | 0.4 | 0.4 | 0.4 |
| n_{d} | | 1.42782 | 1.42819 | 1.42785 | 1.42191 | 1.42277 |
| n_{C} | | 1.42647 | 1.42684 | 1.42650 | 1.42059 | 1.42145 |
| n_{F} | | 1.43089 | 1.43128 | 1.43093 | 1.42493 | 1.42580 |
| n_{g} | | 1.43326 | 1.43365 | 1.43331 | 1.42725 | 1.42812 |
| ν_{d} | | 96.8 | 96.4 | 96.6 | 97.2 | 97.2 |
| θ_{g,F} | | 0.5362 | 0.5338 | 0.5372 | 0.5346 | 0.5333 |

**Table 4**

| | | Example 31 | Example 32 | Example 33 | Example 34 | Example 35 |
|---|---|---|---|---|---|---|
| Glass composition (mol%) | AlF₃ | 30 | 29 | 30 | 29 | 32.5 |
| | ScF₃ | 5 | 7 | 5 | 7 | 20 |
| | MgF₂ | 16.5 | 17.5 | 17 | 12.5 | 4 |
| | CaF₂ | 16 | 13 | 17 | 18 | 15 |
| | SrF₂ | 13 | 18 | 11.5 | 11 | 15 |
| | BaF₂ | 9 | 9 | 5 | 9 | 3 |
| | YF₃ | 10 | 6 | 11.5 | 13 | 10.4 |
| | BaCl₂ | 0.5 | 0.5 | 3 | 0.5 | 0.1 |
| | MgF₂+CaF₂+SrF₂+BaF₂ | 54.5 | 57.5 | 50.5 | 50.5 | 37.0 |
| | ScF₃/(AlF₃+YF₃+ScF₃) | 0.11 | 0.17 | 0.11 | 0.14 | 0.32 |
| Glass composition (cation%) | Al³⁺ | 30 | 29 | 30 | 29 | 32.5 |
| | Sc³⁺ | 5 | 7 | 5 | 7 | 20 |
| | Mg²⁺ | 16.5 | 17.5 | 17 | 12.5 | 4 |
| | Ca²⁺ | 16 | 13 | 17 | 18 | 15 |
| | Sr²⁺ | 13 | 18 | 11.5 | 11 | 15 |
| | Ba²⁺ | 9.5 | 9.5 | 8 | 9.5 | 3.1 |
| | Y³⁺ | 10 | 6 | 11.5 | 13 | 10.4 |
| | Mg²⁺+Ca²⁺+Sr²⁺+Ba²⁺ | 55 | 58 | 53.5 | 51 | 37.1 |
| | Sc³⁺/(Al³⁺+Y³⁺+Sc³⁺) | 0.11 | 0.17 | 0.11 | 0.14 | 0.32 |
| Glass composition (anion%) | F⁻ | 99.6 | 99.6 | 97.6 | 99.6 | 99.9 |
| | Cl⁻ | 0.4 | 0.4 | 2.4 | 0.4 | 0.1 |
| n_{d} | | 1.42539 | 1.42535 | 1.43179 | 1.43171 | 1.37015 |
| n_{C} | | 1.42405 | 1.42401 | 1.43035 | 1.43032 | 1.41753 |
| n_{F} | | 1.42845 | 1.42843 | 1.43505 | 1.43486 | 1.42182 |
| n_{g} | | 1.43080 | 1.43080 | 1.43758 | 1.43729 | 1.42417 |
| ν_{d} | | 96.7 | 96.2 | 91.9 | 95.1 | 86.3 |
| θ_{g,F} | | 0.5341 | 0.5362 | 0.5383 | 0.5352 | 0.5478 |

**Table 4 (Continued)**

| | | Example 36 | Example 37 | Example 38 | Example 39 | Example 40 |
|---|---|---|---|---|---|---|
| Glass composition (mol%) | AlF₃ | 32 | 30.5 | 29 | 40 | 29 |
| | ScF₃ | 4 | 0.5 | 7 | 11.1 | 7 |
| | MgF₂ | 14.5 | 26 | 12.5 | 9 | 12.5 |
| | CaF₂ | 19 | 12 | 18 | 4 | 16 |
| | SrF₂ | 11.5 | 12 | 13 | 16 | 13 |
| | BaF₂ | 4.5 | 8 | 4 | 1 | 6.65 |
| | YF₃ | 12 | 5 | 16 | 17 | 15 |
| | BaCl₂ | 2.5 | 6 | 0.5 | 1.9 | 0.9 |
| | MgF₂+CaF₂+SrF₂+BaF₂ | 49.5 | 58.0 | 47.5 | 30.0 | 48.2 |
| | ScF₃/(AlF₃+YF₃+ScF₃) | 0.08 | 0.01 | 0.13 | 0.16 | 0.14 |
| Glass composition (cation%) | Al³⁺ | 32 | 30.5 | 29 | 40 | 29 |
| | Sc³⁺ | 4 | 0.5 | 7 | 11.1 | 7 |
| | Mg²⁺ | 14.5 | 26 | 12.5 | 9 | 12.5 |
| | Ca²⁺ | 19 | 12 | 18 | 4 | 16 |
| | Sr²⁺ | 11.5 | 12 | 13 | 16 | 13 |
| | Ba²⁺ | 7 | 14 | 4.5 | 2.9 | 7.5 |
| | Y³⁺ | 12 | 5 | 16 | 17 | 15 |
| | Mg²⁺+Ca²⁺+Sr²⁺+Ba²⁺ | 52 | 64 | 48 | 31.9 | 49 |
| | Sc³⁺/(Al³⁺+Y³⁺+Sc³⁺) | 0.08 | 0.01 | 0.13 | 0.16 | 0.14 |
| Glass composition (anion%) | F⁻ | 98.0 | 94.9 | 99.6 | 98.6 | 99.3 |
| | Cl⁻ | 2.0 | 5.1 | 0.4 | 1.4 | 0.7 |
| n_{d} | | 1.42686 | 1.41444 | 1.42940 | 1.39223 | 1.43238 |
| n_{C} | | 1.42549 | 1.41771 | 1.42802 | 1.41752 | 1.43099 |
| n_{F} | | 1.42998 | 1.42164 | 1.43252 | 1.42184 | 1.43554 |
| n_{g} | | 1.43239 | 1.42369 | 1.43493 | 1.42416 | 1.43800 |
| ν_{d} | | 95.1 | 105.5 | 95.4 | 90.8 | 95.0 |
| θ_{g,F} | | 0.5367 | 0.5216 | 0.5356 | 0.5370 | 0.5407 |

**Table 5**

| | | Example 41 | Example 42 | Example 43 | Example 44 | Example 45 |
|---|---|---|---|---|---|---|
| Glass composition (mol%) | AlF₃ | 29 | 28.5 | 31.5 | 29 | 29 |
| | ScF₃ | 7 | 18.5 | 7 | 7 | 7 |
| | MgF₂ | 12.5 | 10 | 17.5 | 14.5 | 12.5 |
| | CaF₂ | 16 | 5 | 15.5 | 18 | 18 |
| | SrF₂ | 13 | 10 | 13 | 10 | 18 |
| | BaF₂ | 9 | 9 | 9 | 9 | 4 |
| | YF₃ | 13 | 15.5 | 6 | 12 | 11 |
| | BaCl₂ | 0.5 | 3.5 | 0.5 | 0.5 | 0.5 |
| | MgF₂+CaF₂+SrF₂+BaF₂ | 50.5 | 34.0 | 55.0 | 51.5 | 52.5 |
| | ScF₃/(AlF₃+YF₃+ScF₃) | 0.14 | 0.30 | 0.16 | 0.15 | 0.15 |
| Glass composition (cation%) | Al³⁺ | 29 | 28.5 | 31.5 | 29 | 29 |
| | Sc³⁺ | 7 | 18.5 | 7 | 7 | 7 |
| | Mg²⁺ | 12.5 | 10 | 17.5 | 14.5 | 12.5 |
| | Ca²⁺ | 16 | 5 | 15.5 | 18 | 18 |
| | Sr²⁺ | 13 | 10 | 13 | 10 | 18 |
| | Ba²⁺ | 9.5 | 12.5 | 9.5 | 9.5 | 4.5 |
| | Y³⁺ | 13 | 15.5 | 6 | 12 | 11 |
| | Mg²⁺+Ca²⁺+Sr²⁺+Ba²⁺ | 51 | 37.5 | 55.5 | 52 | 53 |
| | Sc³⁺/(Al³⁺+Y³⁺+Sc³⁺) | 0.14 | 0.30 | 0.16 | 0.15 | 0.15 |
| Glass composition (anion%) | F⁻ | 99.6 | 97.3 | 99.6 | 99.6 | 99.6 |
| | Cl⁻ | 0.4 | 2.7 | 0.4 | 0.4 | 0.4 |
| n_{d} | | 1.43200 | 1.39367 | 1.42079 | 1.42895 | 1.42723 |
| n_{C} | | 1.43061 | 1.41752 | 1.41946 | 1.42757 | 1.42588 |
| n_{F} | | 1.43515 | 1.42183 | 1.42381 | 1.43207 | 1.43031 |
| n_{g} | | 1.43758 | 1.42416 | 1.42615 | 1.43448 | 1.43270 |
| ν_{d} | | 95.2 | 91.3 | 96.7 | 95.3 | 96.4 |
| θ_{g,F} | | 0.5352 | 0.5406 | 0.5379 | 0.5356 | 0.5395 |

**Table 5 (Continued)**

| | | Example 46 | Example 47 | Example 48 | Example 49 | Example 50 |
|---|---|---|---|---|---|---|
| Glass composition (mol%) | AlF₃ | 31 | 29 | 32 | 30 | 33 |
| | ScF₃ | 1 | 7 | 3.5 | 7 | 3 |
| | MgF₂ | 20 | 12.5 | 14.5 | 17.5 | 12.5 |
| | CaF₂ | 22 | 18 | 19 | 17 | 18 |
| | SrF₂ | 1 | 13 | 11.5 | 13 | 13 |
| | BaF₂ | 10 | 4.5 | 4.5 | 9 | 7 |
| | YF₃ | 10 | 13 | 12 | 6 | 11 |
| | BaCl₂ | 5 | 3 | 3 | 0.5 | 2.5 |
| | MgF₂+CaF₂+SrF₂+BaF₂ | 53.0 | 48.0 | 49.5 | 56.5 | 50.5 |
| | ScF₃/(AlF₃+YF₃+ScF₃) | 0.02 | 0.14 | 0.07 | 0.16 | 0.06 |
| Glass composition (cation%) | Al³⁺ | 31 | 29 | 32 | 30 | 33 |
| | Sc³⁺ | 1 | 7 | 3.5 | 7 | 3 |
| | Mg²⁺ | 20 | 12.5 | 14.5 | 17.5 | 12.5 |
| | Ca²⁺ | 22 | 18 | 19 | 17 | 18 |
| | Sr²⁺ | 1 | 13 | 11.5 | 13 | 13 |
| | Ba²⁺ | 15 | 7.5 | 7.5 | 9.5 | 9.5 |
| | Y³⁺ | 10 | 13 | 12 | 6 | 11 |
| | Mg²⁺+Ca²⁺+Sr²⁺+Ba²⁺ | 58 | 51 | 52.5 | 57 | 53 |
| | Sc³⁺/(Al³⁺+Y³⁺+Sc³⁺) | 0.02 | 0.14 | 0.07 | 0.16 | 0.06 |
| Glass composition (anion%) | F⁻ | 95.9 | 97.6 | 97.6 | 99.6 | 98.0 |
| | Cl⁻ | 4.1 | 2.4 | 2.4 | 0.4 | 2.0 |
| n_{d} | | 1.41444 | 1.43577 | 1.42945 | 1.42280 | 1.42827 |
| n_{C} | | 1.41762 | 1.43432 | 1.42805 | 1.42146 | 1.42689 |
| n_{F} | | 1.42173 | 1.43906 | 1.43263 | 1.42585 | 1.43140 |
| n_{g} | | 1.42391 | 1.44161 | 1.43510 | 1.42821 | 1.43382 |
| ν_{d} | | 100.8 | 91.9 | 93.8 | 96.3 | 95.0 |
| θ_{g,F} | | 0.5304 | 0.5380 | 0.5393 | 0.5376 | 0.5366 |

**Table 6**

| | | Example 51 | Example 52 | Example 53 | Example 54 | Example 55 |
|---|---|---|---|---|---|---|
| Glass composition (mol%) | AlF₃ | 29 | 20 | 33 | 32.2 | 33 |
| | ScF₃ | 7 | 7.1 | 3 | 7.8 | 3 |
| | MgF₂ | 19.5 | 14 | 12.5 | 11.7 | 12.5 |
| | CaF₂ | 16 | 21 | 16 | 16.9 | 18 |
| | SrF₂ | 13 | 4 | 13 | 12.2 | 13 |
| | BaF₂ | 9 | 15 | 7 | 6.6 | 5 |
| | YF₃ | 6 | 18 | 13 | 12.2 | 13 |
| | BaCl₂ | 0.5 | 0.9 | 2.5 | 0.5 | 2.5 |
| | MgF₂+CaF₂+SrF₂+BaF₂ | 57.5 | 54.0 | 48.5 | 47.3 | 48.5 |
| | ScF₃/(AlF₃+YF₃+ScF₃) | 0.17 | 0.16 | 0.06 | 0.15 | 0.06 |
| Glass composition (cation%) | Al³⁺ | 29 | 20 | 33 | 322 | 33 |
| | Sc³⁺ | 7 | 7.1 | 3 | 7.8 | 3 |
| | Mg²⁺ | 19.5 | 14 | 12.5 | 11.7 | 12.5 |
| | Ca²⁺ | 16 | 21 | 16 | 16.9 | 18 |
| | Sr²⁺ | 13 | 4 | 13 | 12.2 | 13 |
| | Ba²⁺ | 9.5 | 15.9 | 9.5 | 7.0 | 7.5 |
| | Y³⁺ | 6 | 18 | 13 | 12.2 | 13 |
| | Mg²⁺+Ca²⁺+Sr²⁺+Ba²⁺ | 58 | 54.9 | 51 | 47.8 | 51 |
| | Sc³⁺/(Al³⁺+Y³⁺+Sc³⁺) | 0.17 | 0.16 | 0.06 | 0.15 | 0.06 |
| Glass composition (anion%) | F⁻ | 99.6 | 99.3 | 98.0 | 99.6 | 98.0 |
| | Cl⁻ | 0.4 | 0.7 | 2.0 | 0.4 | 2.0 |
| n_{d} | | 1.42283 | 1.41645 | 1.43078 | 1.42581 | 1.42865 |
| n_{C} | | 1.42149 | 1.41752 | 1.42940 | 1.42445 | 1.42728 |
| n_{F} | | 1.42589 | 1.42183 | 1.43393 | 1.42889 | 1.43177 |
| n_{g} | | 1.42825 | 1.42416 | 1.43638 | 1.43128 | 1.43419 |
| ν_{d} | | 96.1 | 96.6 | 95.1 | 95.9 | 95.5 |
| θ_{g,F} | | 0.5364 | 0.5406 | 0.5408 | 0.5383 | 0.5390 |

**Table 6 (Continued)**

| | | Example 56 | Example 57 | Example 58 | Example 59 | Example 60 |
|---|---|---|---|---|---|---|
| Glass composition (mol%) | AlF₃ | 34 | 29 | 32 | 29 | 29 |
| | ScF₃ | 7 | 7 | 15 | 9 | 7 |
| | MgF₂ | 17.5 | 19.5 | 13 | 10.5 | 12.5 |
| | CaF₂ | 13 | 13 | 14 | 18 | 18 |
| | SrF₂ | 13 | 13 | 9 | 13 | 13 |
| | BaF₂ | 9 | 12 | 5 | 9 | 6 |
| | YF₃ | 6 | 6 | 11 | 11 | 14 |
| | BaCl₂ | 0.5 | 0.5 | 1 | 0.5 | 0.5 |
| | MgF₂+CaF₂+SrF₂+BaF₂ | 52.5 | 57.5 | 41.0 | 50.5 | 49.5 |
| | ScF₃/(AlF₃+YF₃+ScF₃) | 0.15 | 0.17 | 0.26 | 0.18 | 0.14 |
| Glass composition (cation%) | Al³⁺ | 34 | 29 | 32 | 29 | 29 |
| | Sc³⁺ | 7 | 7 | 15 | 9 | 7 |
| | Mg²⁺ | 17.5 | 19.5 | 13 | 10.5 | 12.5 |
| | Ca²⁺ | 13 | 13 | 14 | 18 | 18 |
| | Sr²⁺ | 13 | 13 | 9 | 13 | 13 |
| | Ba²⁺ | 9.5 | 12.5 | 6 | 9.5 | 6.5 |
| | Y³⁺ | 6 | 6 | 11 | 11 | 14 |
| | Mg²⁺+Ca²⁺+Sr²⁺+Ba²⁺ | 53 | 58 | 42 | 51 | 50 |
| | Sc³⁺/(Al³⁺+Y³⁺+Sc³⁺) | 0.15 | 0.17 | 0.26 | 0.18 | 0.14 |
| Glass composition (anion%) | F⁻ | 99.6 | 99.6 | 99.2 | 99.6 | 99.6 |
| | Cl⁻ | 0.4 | 0.4 | 0.8 | 0.4 | 0.4 |
| n_{d} | | 1.41884 | 1.42451 | 1.41443 | 1.43192 | 1.43031 |
| n_{C} | | 1.41752 | 1.42316 | 1.41757 | 1.43053 | 1.42893 |
| n_{F} | | 1.42184 | 1.42759 | 1.42179 | 1.43509 | 1.43344 |
| n_{g} | | 1.42416 | 1.42997 | 1.42409 | 1.43754 | 1.43586 |
| ν_{d} | | 97.0 | 95.8 | 98.2 | 94.7 | 95.4 |
| θ_{g,F} | | 0.5370 | 0.5372 | 0.5450 | 0.5373 | 0.5366 |

**Table 7**

| | | Example 61 | Example 62 | Example 63 | Example 64 | Example 65 |
|---|---|---|---|---|---|---|
| Glass composition (mol%) | AlF₃ | 29 | 32 | 29 | 29 | 29 |
| | ScF₃ | 7 | 4 | 7 | 7 | 7 |
| | MgF₂ | 12.5 | 12.5 | 12.5 | 12.5 | 19.5 |
| | CaF₂ | 18 | 18 | 16 | 18 | 13 |
| | SrF₂ | 13 | 13 | 13 | 15.5 | 16 |
| | BaF₂ | 7 | 5.5 | 7 | 4 | 9 |
| | YF₃ | 13.5 | 13 | 15 | 13.5 | 6 |
| | BaCl₂ | 0 | 2 | 0.5 | 0.5 | 0.5 |
| | MgF₂+CaF₂+SrF₂+BaF₂ | 50.5 | 49.0 | 48.5 | 50.0 | 57.5 |
| | ScF₃/(AlF₃+YF₃+ScF₃) | 0.14 | 0.08 | 0.14 | 0.14 | 0.17 |
| Glass composition (cation%) | Al³⁺ | 29 | 32 | 29 | 29 | 29 |
| | Sc³⁺ | 7 | 4 | 7 | 7 | 7 |
| | Mg²⁺ | 12.5 | 12.5 | 12.5 | 12.5 | 19.5 |
| | Ca²⁺ | 18 | 18 | 16 | 18 | 13 |
| | Sr²⁺ | 13 | 13 | 13 | 15.5 | 16 |
| | Ba²⁺ | 7 | 7.5 | 7.5 | 4.5 | 9.5 |
| | Y³⁺ | 13.5 | 13 | 15 | 13.5 | 6 |
| | Mg²⁺+Ca²⁺+Sr²⁺+Ba²⁺ | 50.5 | 51 | 49 | 50.5 | 58 |
| | Sc³⁺/(Al³⁺+Y³⁺+Sc³⁺) | 0.14 | 0.08 | 0.14 | 0.14 | 0.17 |
| Glass composition (anion%) | F⁻ | 100.0 | 98.4 | 99.6 | 99.6 | 99.6 |
| | Cl⁻ | 0.0 | 1.6 | 0.4 | 0.4 | 0.4 |
| n_{d} | | 1.42950 | 1.42938 | 1.43134 | 1.42823 | 1.42334 |
| n_{C} | | 1.42814 | 1.42800 | 1.42996 | 1.42686 | 1.42200 |
| n_{F} | | 1.43261 | 1.43250 | 1.43447 | 1.43133 | 1.42640 |
| n_{g} | | 1.43500 | 1.43493 | 1.43691 | 1.43372 | 1.42876 |
| ν_{d} | | 96.1 | 95.4 | 95.6 | 95.8 | 96.2 |
| θ_{g,F} | | 0.5347 | 0.5400 | 0.5410 | 0.5347 | 0.5364 |

**Table 7 (Continued)**

| | | Example 66 | Example 67 | Example 68 | Example 69 | Example 70 |
|---|---|---|---|---|---|---|
| Glass composition (mol%) | AlF₃ | 29 | 26 | 28 | 29 | 25 |
| | ScF₃ | 0.3 | 10 | 16.3 | 7 | 13.5 |
| | MgF₂ | 21 | 12.5 | 5 | 12.5 | 12 |
| | CaF₂ | 10 | 18 | 10 | 18 | 3 |
| | SrF₂ | 29 | 13 | 27 | 13 | 23 |
| | BaF₂ | 6 | 7 | 5 | 9 | 3 |
| | YF₃ | 0.2 | 13 | 6 | 11 | 19 |
| | BaCl₂ | 4.5 | 0.5 | 2.7 | 0.5 | 1.5 |
| | MgF₂+CaF₂+SrF₂+BaF₂ | 66.0 | 50.5 | 47.0 | 52.5 | 41.0 |
| | ScF₃/(AlF₃+YF₃+ScF₃) | 0.01 | 0.20 | 0.32 | 0.15 | 0.23 |
| Glass composition (cation%) | Al³⁺ | 29 | 26 | 28 | 29 | 25 |
| | Sc³⁺ | 0.3 | 10 | 16.3 | 7 | 13.5 |
| | Mg²⁺ | 21 | 12.5 | 5 | 12.5 | 12 |
| | Ca²⁺ | 10 | 18 | 10 | 18 | 3 |
| | Sr²⁺ | 29 | 13 | 27 | 13 | 23 |
| | Ba²⁺ | 10.5 | 7.5 | 7.7 | 9.5 | 4.5 |
| | Y³⁺ | 0.2 | 13 | 6 | 11 | 19 |
| | Mg²⁺+Ca²⁺+Sr²⁺+Ba²⁺ | 70.5 | 51 | 49.7 | 53 | 42.5 |
| | Sc³⁺/(Al³⁺+Y³⁺+Sc³⁺) | 0.01 | 0.20 | 0.32 | 0.15 | 0.23 |
| Glass composition (anion%) | F⁻ | 96.1 | 99.6 | 97.8 | 99.6 | 98.8 |
| | Cl⁻ | 3.9 | 0.4 | 2.2 | 0.4 | 1.2 |
| n_{d} | | 1.41444 | 1.43488 | 1.38107 | 1.43077 | 1.40658 |
| n_{C} | | 1.41763 | 1.43347 | 1.41752 | 1.42940 | 1.41752 |
| n_{F} | | 1.42173 | 1.43810 | 1.42183 | 1.43391 | 1.42184 |
| n_{g} | | 1.42386 | 1.44060 | 1.42416 | 1.43633 | 1.42416 |
| ν_{d} | | 101.1 | 93.9 | 88.4 | 95.5 | 94.1 |
| θ_{g,F} | | 0.5195 | 0.5400 | 0.5406 | 0.5366 | 0.5370 |

**Table 8**

| | | Example 71 | Example 72 | Example 73 | Example 74 | Example 75 |
|---|---|---|---|---|---|---|
| Glass composition (mol%) | AlF₃ | 33 | 29 | 31 | 32 | 29 |
| | ScF₃ | 3 | 7 | 5 | 7 | 7 |
| | MgF₂ | 10.5 | 19.5 | 14.5 | 19.5 | 17.5 |
| | CaF₂ | 18 | 13 | 19 | 13 | 18 |
| | SrF₂ | 15 | 13 | 11.5 | 13 | 13 |
| | BaF₂ | 5 | 9 | 4.5 | 9 | 9 |
| | YF₃ | 13 | 9 | 12 | 6 | 6 |
| | BaCl₂ | 2.5 | 0.5 | 2.5 | 0.5 | 0.5 |
| | MgF₂+CaF₂+SrF₂+BaF₂ | 48.5 | 54.5 | 49.5 | 54.5 | 57.5 |
| | ScF₃/(AlF₃+YF₃+ScF₃) | 0.06 | 0.16 | 0.10 | 0.16 | 0.17 |
| Glass composition (cation%) | Al³⁺ | 33 | 29 | 31 | 32 | 29 |
| | Sc³⁺ | 3 | 7 | 5 | 7 | 7 |
| | Mg²⁺ | 10.5 | 19.5 | 14.5 | 19.5 | 17.5 |
| | Ca²⁺ | 18 | 13 | 19 | 13 | 18 |
| | Sr²⁺ | 15 | 13 | 11.5 | 13 | 13 |
| | Ba²⁺ | 7.5 | 9.5 | 7 | 9.5 | 9.5 |
| | Y³⁺ | 13 | 9 | 12 | 6 | 6 |
| | Mg²⁺+Ca²⁺+Sr²⁺+Ba²⁺ | 51 | 55 | 52 | 55 | 58 |
| | Sc³⁺/(Al³⁺+Y³⁺+Sc³⁺) | 0.06 | 0.16 | 0.10 | 0.16 | 0.17 |
| Glass composition (anion%) | F⁻ | 98.0 | 99.6 | 98.0 | 99.6 | 99.6 |
| | Cl⁻ | 2.0 | 0.4 | 2.0 | 0.4 | 0.4 |
| n_{d} | | 1.43185 | 1.42451 | 1.42679 | 1.41943 | 1.42415 |
| n_{C} | | 1.43047 | 1.42316 | 1.42542 | 1.41811 | 1.42280 |
| n_{F} | | 1.43499 | 1.42759 | 1.42989 | 1.42245 | 1.42721 |
| n_{g} | | 1.43744 | 1.42997 | 1.43230 | 1.42478 | 1.42957 |
| ν_{d} | | 95.5 | 95.8 | 95.5 | 96.6 | 96.2 |
| θ_{g,F} | | 0.5420 | 0.5372 | 0.5391 | 0.5369 | 0.5351 |

**Table 8 (Continued)**

| | | Example 76 | Example 77 | Example 78 | Example 79 | Example 80 |
|---|---|---|---|---|---|---|
| Glass composition (mol%) | AlF₃ | 33 | 29 | 29 | 32 | 29 |
| | ScF₃ | 3 | 7 | 7 | 4 | 7 |
| | MgF₂ | 12.5 | 12.5 | 12.5 | 12.5 | 12.5 |
| | CaF₂ | 16 | 18 | 18 | 18 | 13 |
| | SrF₂ | 15 | 13 | 13 | 13 | 15.5 |
| | BaF₂ | 5 | 7.5 | 4 | 7 | 9 |
| | YF₃ | 13 | 13 | 16 | 13 | 13.5 |
| | BaCl₂ | 2.5 | 0 | 0.5 | 0.5 | 0.5 |
| | MgF₂+CaF₂+SrF₂+BaF₂ | 48.5 | 51.0 | 47.5 | 50.5 | 50.0 |
| | ScF₃/(AlF₃+YF₃+ScF₃) | 0.06 | 0.14 | 0.13 | 0.08 | 0.14 |
| Glass composition (cation%) | Al³⁺ | 33 | 29 | 29 | 32 | 29 |
| | Sc³⁺ | 3 | 7 | 7 | 4 | 7 |
| | Mg²⁺ | 12.5 | 12.5 | 12.5 | 12.5 | 12.5 |
| | Ca²⁺ | 16 | 18 | 18 | 18 | 13 |
| | Sr²⁺ | 15 | 13 | 13 | 13 | 15.5 |
| | Ba²⁺ | 7.5 | 7.5 | 4.5 | 7.5 | 9.5 |
| | Y³⁺ | 13 | 13 | 16 | 13 | 13.5 |
| | Mg²⁺+Ca²⁺+Sr²⁺+Ba²⁺ | 51 | 51 | 48 | 51 | 50.5 |
| | Sc³⁺/(Al³⁺+Y³⁺+Sc³⁺) | 0.06 | 0.14 | 0.13 | 0.08 | 0.14 |
| Glass composition (anion%) | F⁻ | 98.0 | 100.0 | 99.6 | 99.6 | 99.6 |
| | Cl⁻ | 2.0 | 0.0 | 0.4 | 0.4 | 0.4 |
| n_{d} | | 1.42937 | 1.43011 | 1.42878 | 1.42704 | 1.43262 |
| n_{C} | | 1.42800 | 1.42874 | 1.42741 | 1.42570 | 1.43124 |
| n_{F} | | 1.43250 | 1.43323 | 1.43191 | 1.43010 | 1.43577 |
| n_{g} | | 1.43493 | 1.43563 | 1.43431 | 1.43245 | 1.43822 |
| ν_{d} | | 95.4 | 95.8 | 95.3 | 97.1 | 95.5 |
| θ_{g,F} | | 0.5400 | 0.5345 | 0.5333 | 0.5341 | 0.5408 |

**Table 9**

| | | Example 81 | Example 82 | Example 83 | Example 84 | Example 85 |
|---|---|---|---|---|---|---|
| Glass composition (mol%) | AlF₃ | 29 | 32 | 29 | 30.6 | 30 |
| | ScF₃ | 7 | 4 | 7 | 7.4 | 7 |
| | MgF₂ | 15.5 | 14.5 | 10.5 | 12.1 | 19.5 |
| | CaF₂ | 20 | 19 | 18 | 17.4 | 15 |
| | SrF₂ | 13 | 11 | 13 | 12.6 | 13 |
| | BaF₂ | 9 | 4.5 | 9 | 6.8 | 9 |
| | YF₃ | 6 | 12 | 13 | 12.6 | 6 |
| | BaCl₂ | 0.5 | 3 | 0.5 | 0.5 | 0.5 |
| | MgF₂+CaF₂+SrF₂+BaF₂ | 57.5 | 49.0 | 50.5 | 48.9 | 56.5 |
| | ScF₃/(AlF₃+YF₃+ScF₃) | 0.17 | 0.08 | 0.14 | 0.15 | 0.16 |
| Glass composition (cation%) | Al³⁺ | 29 | 32 | 29 | 30.6 | 30 |
| | Sc³⁺ | 7 | 4 | 7 | 7.4 | 7 |
| | Mg²⁺ | 15.5 | 14.5 | 10.5 | 12.1 | 19.5 |
| | Ca²⁺ | 20 | 19 | 18 | 17.4 | 15 |
| | Sr²⁺ | 13 | 11 | 13 | 12.6 | 13 |
| | Ba²⁺ | 9.5 | 7.5 | 9.5 | 7.3 | 9.5 |
| | Y³⁺ | 6 | 12 | 13 | 12.6 | 6 |
| | Mg²⁺+Ca²⁺+Sr²⁺+Ba²⁺ | 58 | 52 | 51 | 49.4 | 57 |
| | Sc³⁺/(Al³⁺+Y³⁺+Sc³⁺) | 0.17 | 0.08 | 0.14 | 0.15 | 0.16 |
| Glass composition (anion%) | F⁻ | 99.6 | 97.6 | 99.6 | 99.6 | 99.6 |
| | Cl⁻ | 0.4 | 2.4 | 0.4 | 0.4 | 0.4 |
| n_{d} | | 1.42533 | 1.42805 | 1.43392 | 1.42811 | 1.42175 |
| n_{C} | | 1.42398 | 1.42667 | 1.43253 | 1.42675 | 1.42041 |
| n_{F} | | 1.42841 | 1.43120 | 1.43710 | 1.43122 | 1.42479 |
| n_{g} | | 1.43079 | 1.43364 | 1.43955 | 1.43362 | 1.42714 |
| ν_{d} | | 96.0 | 94.5 | 94.9 | 95.8 | 96.3 |
| θ_{g,F} | | 0.5372 | 0.5386 | 0.5361 | 0.5369 | 0.5365 |

**Table 9 (Continued)**

| | | Example 86 | Example 87 | Example 88 | Example 89 | Example 90 |
|---|---|---|---|---|---|---|
| Glass composition (mol%) | AlF₃ | 29 | 30 | 29 | 33 | 31.5 |
| | ScF₃ | 7 | 7 | 7 | 3 | 4 |
| | MgF₂ | 7.5 | 15.5 | 14.5 | 10.5 | 14.5 |
| | CaF₂ | 18 | 19 | 18 | 18 | 19 |
| | SrF₂ | 13 | 13 | 13 | 13 | 11.5 |
| | BaF₂ | 9 | 9 | 9 | 7 | 4.5 |
| | YF₃ | 16 | 6 | 9 | 13 | 12 |
| | BaCl₂ | 0.5 | 0.5 | 0.5 | 2.5 | 3 |
| | MgF₂+CaF₂+SrF₂+BaF₂ | 47.5 | 56.5 | 54.5 | 48.5 | 49.5 |
| | ScF₃/(AlF₃+YF₃+ScF₃) | 0.13 | 0.16 | 0.16 | 0.06 | 0.08 |
| Glass composition (cation%) | Al³⁺ | 29 | 30 | 29 | 33 | 31.5 |
| | Sc³⁺ | 7 | 7 | 7 | 3 | 4 |
| | Mg²⁺ | 7.5 | 15.5 | 14.5 | 10.5 | 14.5 |
| | Ca²⁺ | 18 | 19 | 18 | 18 | 19 |
| | Sr²⁺ | 13 | 13 | 13 | 13 | 11.5 |
| | Ba²⁺ | 9.5 | 9.5 | 9.5 | 9.5 | 7.5 |
| | Y³⁺ | 16 | 6 | 9 | 13 | 12 |
| | Mg²⁺+Ca²⁺+Sr²⁺+Ba²⁺ | 48 | 57 | 55 | 51 | 52.5 |
| | Sc³⁺/(Al³⁺+Y³⁺+Sc³⁺) | 0.13 | 0.16 | 0.16 | 0.06 | 0.08 |
| Glass composition (anion%) | F⁻ | 99.6 | 99.6 | 99.6 | 98.0 | 97.6 |
| | Cl⁻ | 0.4 | 0.4 | 0.4 | 2.0 | 2.4 |
| n_{d} | | 1.43774 | 1.42396 | 1.42790 | 1.43183 | 1.42919 |
| n_{C} | | 1.43635 | 1.42261 | 1.42654 | 1.43044 | 1.42779 |
| n_{F} | | 1.44097 | 1.42702 | 1.43100 | 1.43498 | 1.43236 |
| n_{g} | | 1.44346 | 1.42939 | 1.43340 | 1.43743 | 1.43481 |
| ν_{d} | | 94.7 | 96.1 | 95.9 | 95.1 | 93.9 |
| θ_{g,F} | | 0.5390 | 0.5374 | 0.5381 | 0.5396 | 0.5361 |

**Table 10**

| | | Example 91 | Example 92 | Example 93 | Example 94 | Example 95 | Comparative Example 1 |
|---|---|---|---|---|---|---|---|
| Glass compos ition (mol%) | AlF₃ | 27.4 | 29 | 33 | 32 | 30 | 31 |
| | ScF₃ | 6.6 | 7 | 3 | 3.5 | 5 | 0 |
| | MgF₂ | 12.9 | 12.5 | 10.5 | 16 | 16 | 6.2 |
| | CaF₂ | 18.6 | 18 | 18 | 18 | 18 | 19.9 |
| | SrF₂ | 13.4 | 12 | 13 | 11 | 11.5 | 23 |
| | BaF₂ | 7.2 | 7 | 5 | 4.5 | 5 | 11.5 |
| | YF₃ | 13.4 | 14 | 15 | 12 | 11.5 | 8.4 |
| | BaCl₂ | 0.5 | 0.5 | 2.5 | 3 | 3 | 0 |
| | MgF₂+CaF₂+SrF₂+BaF₂ | 52.1 | 49.5 | 46.5 | 49.5 | 50.5 | 60.6 |
| | ScF₃/(AlF₃+YF₃+ScF₃) | 0.14 | 0.14 | 0.06 | 0.07 | 0.11 | 0.00 |
| Glass compos ition (cation %) | Al³⁺ | 27.4 | 29 | 33 | 32 | 30 | 31 |
| | Sc³⁺ | 6.6 | 7 | 3 | 3.5 | 5 | 0 |
| | Mg²⁺ | 12.9 | 12.5 | 10.5 | 16 | 16 | 6.2 |
| | Ca²⁺ | 18.6 | 18 | 18 | 18 | 18 | 19.9 |
| | Sr²⁺ | 13.4 | 12 | 13 | 11 | 11.5 | 23 |
| | Ba²⁺ | 7.7 | 7.5 | 7.5 | 7.5 | 8 | 11.5 |
| | Y³⁺ | 13.4 | 14 | 15 | 12 | 11.5 | 8.4 |
| | Mg²⁺+Ca²⁺+Sr²⁺+Ba²⁺ | 52.6 | 50 | 49 | 52.5 | 53.5 | 60.6 |
| | Sc³⁺/(Al³⁺+Y³⁺+Sc³⁺) | 0.14 | 0.14 | 0.06 | 0.07 | 0.11 | 0.00 |
| Glass compos ition (anion %) | F⁻ | 99.6 | 99.6 | 98.0 | 97.6 | 97.6 | 100 |
| | Cl⁻ | 0.4 | 0.4 | 2.0 | 2.4 | 2.4 | 0 |
| n_{d} | | 1.43263 | 1.43078 | 1.43157 | 1.42770 | 1.43200 | 1.41639 |
| n_{C} | | 1.43125 | 1.42940 | 1.43019 | 1.42631 | 1.43058 | 1.41041 |
| n_{F} | | 1.43579 | 1.43392 | 1.43473 | 1.43085 | 1.43523 | 1.41460 |
| n_{g} | | 1.43823 | 1.43635 | 1.43717 | 1.43330 | 1.43774 | 1.41676 |
| ν_{d} | | 95.3 | 95.3 | 95.1 | 94.2 | 92.9 | 99.4 |
| θ_{g,F} | | 0.5374 | 0.5376 | 0.5374 | 0.5396 | 0.5398 | 0.5155 |

Samples were prepared according to the following procedure. First, raw materials were weighed to have the compositions shown in Tables 1 to 10 to obtain raw material batches. Next, each of the raw material batches was charged into a crucible and melted at 900°C to 1100°C, and then the melt was quenched to obtain a sample. For the obtained sample, the refractive index was measured, and the Abbe number (vd) and the partial dispersion ratio (θg, F) were determined. The results for the refractive index (nd), the Abbe number (vd), and the partial dispersion ratio (θg, F) are shown in Tables 1 to 10.

The refractive index was measured using the well-known V-block method. The measurement was carried out using a Kalnew precision refractometer (KPR-2000, manufactured by Shimadzu Corporation).

The Abbe number (νd) and the partial dispersion ratio (θg, F) were calculated according to the following equations using the measured values of the refractive indexes nd (587.56 nm), nC (656.27 nm), nF (486.07 nm), and ng (435.83 nm). $νd = \left(nd-1\right) / \left(nF-nC\right)$
$θg , F = \left(ng-nF\right) / \left(nF-nC\right)$

As can be seen from Tables 1 to 10, in Examples 1 to 95, the refractive index (nd) was 1.41 or more, the Abbe number (vd) was 85 or more, and the partial dispersion ratio (θg, F) was 0.516 or more. On the other hand, in Comparative Example 1, the partial dispersion ratio (θg, F) was less than 0.516.

### INDUSTRIAL APPLICABILITY

The halide glass according to the present invention can be suitably used as an optical element such as a lens, a prism, a filter, a diffraction grating, or an optical fiber. In particular, it can be suitably used as a special low dispersion lens.

## Claims

1. A halide glass comprising, in mol%, from 11% to 40% of AlF₃, from 0.1% to 20% of ScF₃, and from 10% to 88.9% of MgF₂+CaF₂+SrF₂+BaF₂.

2. The halide glass according to claim 1, further comprising, in mol%, from 0% to 30% of MgF₂, from 0% to 30% of CaF₂, from 0% to 30% of SrF₂, and from 0% to 20% of BaF₂.

3. The halide glass according to claim 1 or 2, further comprising, in mol%, from 0% to 20% of YF₃.

4. The halide glass according to claim 1 or 2, wherein ScF₃/(AlF₃+YF₃+ScF₃) is from 0.01 to 0.5 in molar ratio.

5. A halide glass comprising, in cation%, from 11% to 60% of Al³⁺, from 0.1% to 20% of Sc³⁺, and from 10% to 88.9% of Mg²⁺+Ca²⁺+Sr²⁺+Ba²⁺, and comprising, in anion%, from 70% to 100% of F⁻.

6. The halide glass according to claim 5, further comprising, in anion%, from 0% to 10% of Cl⁻+Br⁻+I⁻.

7. The halide glass according to claim 5 or 6, further comprising, in cation%, from 0% to 30% of Mg²⁺, from 0% to 30% of Ca²⁺, from 0% to 30% of Sr²⁺, and from 0% to 20% of Ba²⁺.

8. The halide glass according to claim 5 or 6, further comprising, in cation%, from 0% to 20% of Y³⁺.

9. The halide glass according to claim 5 or 6, further comprising, in cation%, less than 0.01% of Ln (Ln is at least one selected from Cr, Ce, Nd, Yb, Er, Pr, Sm, Eu, Tb, Dy, Ho, and Tm).

10. The halide glass according to claim 1 or 5, wherein an Abbe number (vd) is from 85 to 110.

11. The halide glass according to claim 1 or 5, wherein a partial dispersion ratio (θg, F) is from 0.516 to 0.580.

12. An optical element comprising: the halide glass according to claim 1 or 5.
